# EUROPÄISCHE PATENTSCHRIFT

(11) **EP 3 420 212 B1**
(45) Veröffentlichungstag und Bekanntmachung des Hinweises auf die Patenterteilung: **14.04.2021**
(21) Anmeldenummer: 16801189.8
(22) Anmeldetag: 23.11.2016
(51) Int. Cl.: F02D 41/04, F02D 41/06, F02D 41/18, F02D 41/22, G01F 1/68, G01F 1/696

(54) **VERFAHREN ZUM ERMITTELN EINER LUFTMASSE IN EINER BRENNKRAFTMASCHINE**
METHOD FOR DETERMINING AN AIR MASS IN AN INTERNAL COMBUSTION ENGINE
PROCÉDÉ DE DÉTERMINATION D'UNE MASSE D'AIR DANS UN MOTEUR À COMBUSTION INTERNE

(30) Priorität: 24.02.2016 DE 102016202803
(43) Veröffentlichungstag der Anmeldung: 02.01.2019
(73) Patentinhaber: Vitesco Technologies GmbH, 30165 Hannover (DE)
(72) Erfinder: KNITTEL, Thorsten, 93080 Pentling (DE); SETESCAK, Stephen, 93080 Pentling (DE)
(86) Internationale Anmeldenummer: PCT/EP2016/078596
(87) Internationale Veröffentlichungsnummer: WO 2017/144132

(56) Entgegenhaltungen:
- DE-A1- 3 910 676
- DE-A1- 10 133 526
- DE-A1- 19 927 674
- DE-A1-102012 219 290
- US-A1- 2003 079 725

## Beschreibung

Die vorliegende Erfindung betrifft ein Verfahren zum Ermitteln einer zugeführten Luftmasse in einer Brennkraftmaschine und insbesondere ein Verfahren zur Fehlerkorrektur der ermittelten Luftmasse in einer Brennkraftmaschine.

Luftmassenmesser werden in Brennkraftmaschinen dazu eingesetzt, die Masse der angesaugten und den Zylindern der Brennkraftmaschine zugeführten Luft zu ermitteln. Üblicherweise wird der Luftmassenmesser zwischen einem Turbolader und einem stromaufwärts angeordneten Luftfilter in der Einlassleitung positioniert. Luftmassenmesser können die Luftmasse beispielsweise mittels der sogenannten Temperaturdifferenzmethode ermitteln. Außerdem sind Luftmassenmesser bekannt, die darauf basieren, die Temperatur eines Bereichs des Luftmassenmessers mittels einer Heizeinrichtung möglichst konstant zu halten aus der Versorgungsspannung Heizeinrichtung und den gemessenen Temperaturen den Luftmassenstrom zu ermitteln. Weitere Verfahren zum Betreiben eines Luftmassenmessers sind beispielsweise die Messung mit einem Hitzdrahtanemometer oder die Ultraschall-Laufzeitmessung.

Die DE 10 2012 219 290 A1 betrifft ein Verfahren zum Betreiben eines Luftmassenmessers zur Ermittlung eines einer Brennkraftmaschine zugeführten Luftmassenstromes.

Aus der DE 199 27 674 A1 ist ein Verfahren und eine Vorrichtung zum Steuern einer Brennkraftmaschine bekannt.

Die DE 39 10 676 A1 betrifft ein Verfahren und eine Einrichtung zum Betreiben eines Luftmassenstrommessers.

Luftmassenmesser können im Laufe des Betriebs Signale auszugeben, die dem aktuell vorhandenen Luftmassenstrom nicht mehr vollständig entsprechen. Solche fehlerhaften Signale können sich mit zunehmender Betriebsdauer vergrößern, was zu einer nicht mehr optimalen Steuerung der Brennkraftmaschine, insbesondere der Abgasrückführung, führt.

Die Aufgabe der vorliegenden Erfindung besteht darin, ein Verfahren zum Ermitteln der aktuellen Luftmasse in einer Brennkraftmaschine bereitzustellen, mit dem der aktuelle Luftmassenstrom in einer Brennkraftmaschine möglichst genau ermittelt werden kann.

Diese Aufgabe wird mit den Merkmalen des unabhängigen Anspruchs 1 gelöst. Vorteilhafte Ausgestaltungen sind in den Unteransprüchen angegeben.

Der vorliegenden Erfindung liegt der Gedanke zugrunde, bei einem Kaltstart der Brennkraftmaschine, d. h. zu einem Zeitpunkt, bei dem kein Luftmassenstrom in der Einlaufleitung vorliegt, eine Messung mittels eines Luftmassenmesser durchzuführen und dieses von dem Luftmassenmesser gelieferte Referenzsignal in einen entsprechenden Luftmassenstromoffset umzurechnen. Beispielsweise erzeugen fehlerhafte Luftmassenmesser an dem Kaltstart-Messzeitpunkt ein Signal aus, das einen geringen Luftmassenstromwert anzeigt. Gemäß dem erfindungsgemäßen Verfahren kann jedoch der bestimmte Luftmassenstromoffset bei der während des Betriebs der Brennkraftmaschine mittels dem Luftmassenmesser kontinuierlich erfasste Luftmassenstromwert berücksichtigt und entsprechend korrigiert werden. Genauer gesagt kann der Luftmassenstromoffset, der von dem Luftmassenmesser bei einem Kaltstart geliefert wird, bei den weiteren ermittelten Luftmassenwerten zur Korrektur verwendet werden.

Ein erfindungsgemäßes Verfahren zum Ermitteln eines korrigierten Luftmassenstromwerts einer Brennkraftmaschine, die einen in einem Einlasstrakt der Brennkraftmaschine angeordneten Luftmassenmesser aufweist, umfasst ein Bestimmen einer Kaltstartbedingung der Brennkraftmaschine an zumindest einem ersten Zeitpunkt, an dem noch kein Luftmassenstrom im Einlasstrakt vorliegt. Das erfindungsgemäße Verfahren umfasst zudem ein Erzeugen von zumindest einem Referenzsignal mittels des Luftmassenmessers an dem zumindest einen ersten Zeitpunkt, und ein Ermitteln von zumindest einem Luftmassenstromoffset aus dem zumindest einen Referenzsignal des Luftmassenmessers. Ferner weist das erfindungsgemäße Verfahren ein Erzeugen eines Messsignals mittels des Luftmassenmessers an zumindest einem zweiten Zeitpunkt, der ungleich dem zumindest einen ersten Zeitpunkt ist und in einer Betriebsdauer der Brennkraftmaschine liegt, ein Ermitteln eines Luftmassenstromwerts auf der Grundlage des Messsignals des Luftmassenmessers, ein Ermitteln des korrigierten Luftmassenstromwerts aus dem zumindest einen Luftmassenstromoffset und dem Luftmassenstromwert und ein Ermitteln eines Korrekturluftmassenstromwerts aus dem zumindest einen Luftmassenstromoffset auf. Dabei erfolgt das Ermitteln des korrigierten Luftmassenstromwerts durch Subtraktion eines vorbestimmten Anteils des ermittelten Korrekturluftmassenstromwerts vom Luftmassenstromwert. Da bei einer Subtraktion des vollständigen Korrekturmassenstromwerts eine Überkompensierung des Fehlers vorliegt, ist es erfindungsgemäß, wenn der vorbestimmte Anteil des Korrekturluftmassenstromwerts in einem Bereich von ungefähr 50 % bis ungefähr 99 %, insbesondere in einem Bereich von ungefähr 70 % bis ungefähr 95 %, liegt. Ferner ist der vorbestimmte Anteil des Korrekturluftmassenstromwerts von der Sensitivität und/oder der Rohkennlinie des Luftmassenmessers abhängig.

Der zumindest eine erste Zeitpunkt liegt vorzugsweise kurz vor einem Kaltstart der Brennkraftmaschine . Beispielsweise liegt der zumindest eine erste Zeitpunkt in einem Zeitintervall zwischen einem Aktivieren einer Zündung der Brennkraftmaschine und dem Anlaufbeginn der Brennkraftmaschine. Das heißt, dass das Referenzsignal des Luftmassenmessers kurz vor dem Start der Brennkraftmaschine geliefert wird. Zu diesem ersten Zeitpunkt wird davon ausgegangen, dass im Einlasstrakt der Brennkraftmaschine kein Luftmassenstrom vorhanden ist und folglich der Luftmassenstromwert bei null liegt.

Die Ermittlung der Luftmassenstromwerte aus den Signalen des Luftmassenmessers erfolgt aus einer vorbestimmten Kennlinie des Luftmassenmessers. Beispielsweise ist im Luftmassenmesser ein vorbestimmtes Kennfeld hinterlegt, beispielsweise in Form eines Diagramms, in dem das Signal gegenüber dem Luftmassenstrom aufgetragen ist. Diese Signalkennlinie ist bevorzugt zumindest teilweise nicht linear. Beispielsweise ist die Signalkennlinie im Wesentlichen ähnlich zu einer Wurzelfunktion.

Vorzugsweise werden aus mehreren Luftmassenstromoffsets, die an unterschiedlichen ersten Zeitpunkten ermittelt wurden, beispielsweise ein gemittelter Luftmassenstromoffset als Korrekturluftmassenstromwert ermittelt. Zum Beispiel ist der Korrekturluftmassenstromwert das arithmetische Mittel der mehreren Luftmassenstromoffsets.

Aus der Subtraktion werden die vom Luftmassenmesser ermittelten Signale und die daraus errechneten Luftmassenstromwerte dahingehend korrigiert, dass der am ersten Zeitpunkt vorliegende Luftmassenstromfehler berücksichtigt wird und bei der Auswertung der Signale des Luftmassenstrommessers während dem Betrieb der Brennkraftmaschine einfließen. Folglich kann der tatsächliche Luftmassenstromwert genauer bestimmt werden, was die Steuerung der Brennkraftmaschine weiter verbessern kann, insbesondere bezüglich einer Abgasrückführungssteuerung.

In einer beispielhaften Ausgestaltung kann nach einer Kalibrierung des Luftmassenmessers ein entsprechendes Protokoll für die Brennkraftmaschinensteuerung erzeugt werden, welches den dazugehörigen, von der Kalibrierung abhängigen vorbestimmten Anteil (in Prozent) für den jeweiligen Luftmassenmesser anzeigen kann.

Vorzugsweise weist das Bestimmen der Kaltstartbedingung der Brennkraftmaschine ein Bestimmen auf, dass die Zündung der Brennkraftmaschine aktiviert wurde. Zusätzlich oder alternativ weist das Bestimmen der Kaltstartbedingung der Brennkraftmaschine ein Bestimmen auf, dass die Drehzahl der Brennkraftmaschine bei null liegt und/oder ein Bestimmen auf, dass die Temperatur der Brennkraftmaschine (beispielsweise die Öl- oder Wassertemperatur der Brennkraftmaschine) unterhalb einer vorbestimmten Schwellentemperatur liegt. Liegt beispielsweise die Öltemperatur der Brennkraftmaschine innerhalb eines Bereichs um die Umgebungslufttemperatur herum (beispielsweise ± 10°C), so kann eine Kaltstartbedingung der Brennkraftmaschine ermittelt werden.

Im Rahmen der vorliegenden Offenbarung bezeichnet der Ausdruck "Luftmassenstromwert" einen Wert, der den im Einlasstrakt aktuellen Luftmassenstrom mit beispielsweise der Einheit [kg/h] anzeigt. Ferner bezeichnet der Ausdruck "Luftmassenstromoffset" einen vor einem Kaltstart der Brennkraftmaschine ermittelten Luftmassenstromwert, der bei Ermittlung der während der Betriebsdauer der Brennkraftmaschine ermittelten Luftmassenstromwerte berücksichtigt wird. Das heißt, dass der Luftmassenstromoffset einen Korrekturwert bzw. Kalibrierwert des Luftmassenmessers bei keiner Luftmassenströmung darstellt. Die hierin beschriebenen Messsignale und Referenzsignale, die der Luftmassenmesser erzeugt, sind Signale, die von einer separaten Steuereinheit, beispielsweise der Steuereinheit der Brennkraftmaschine, in einen entsprechenden Luftmassenstromwert umgerechnet werden. Beispielsweise stellen die Messsignale und Referenzsignale des Luftmassenmessers ein sogenanntes SENT (Single Edge Nibble Transmission)-Signal dar.

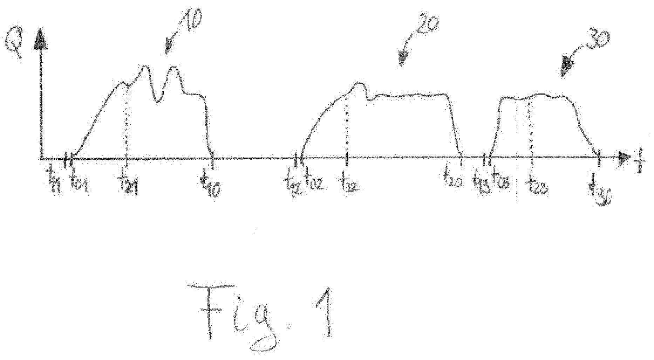

Weitere Merkmale und Ausgestaltungen des erfindungsgemäßen Verfahrens werden unter nachfolgende Bezugnahme auf die einzige Zeichnung ersichtlich. Die Fig. 1 stellt beispielhaft ein Diagramm dar, in dem ein exemplarischer Luftmassenstrom einer Brennkraftmaschine gegenüber der Zeit aufgetragen ist.

Die Fig. 1 zeigt ein Diagramm, das beispielhaft drei Betriebsdauern 10, 20, 30 einer Brennkraftmaschine (nicht gezeigt) darstellt. Während der drei Betriebsdauern 10, 20, 30 treten unterschiedliche Luftmassenströme und folglich unterschiedliche Luftmassenstromwerte innerhalb der Brennkraftmaschine auf.

Die Zeitspanne zwischen den Zeitpunkten t₀₁, an dem die Drehzahl der Brennkraftmaschine noch null ist, und t₁₀, an dem die Drehzahl der Brennkraftmaschine wieder null ist, zeigt die erste Betriebsdauer 10 an. In ähnlicher Weise zeigen Zeitspannen zwischen den Zeitpunkten t₀₂ und t₂₀ bzw. zwischen den Zeitpunkten t₀₃ und t₃₀ die zweite bzw. dritte Betriebsdauer 20, 30 an.

An einem ersten Zeitpunkt t₁₁ wird eine Kaltstartbedingung der Brennkraftmaschine erfasst. Beispielsweise wird bestimmt, dass die Zündung der Brennkraftmaschine aktiviert wurde und somit an diesem ersten Zeitpunkt t₁₁ nun ein Strom an einem in einem Einlasstrakt der Brennkraftmaschine angeordneten Luftmassenmesser (nicht gezeigt) anliegt. Der Luftmassenmesser ist dazu ausgebildet, ein Signal zu erzeugen, das den aktuellen Luftmassenstrom im Einlasstrakt der Brennkraftmaschine anzeigt. Beispielsweise liegt der erste Zeitpunkt t₁₁ ungefähr 200 ms vor dem Zeitpunkt t₀₁, an dem die Brennkraftmaschine gestartet wird.

Folglich wird am ersten Zeitpunkt t₁₁ ein erstes Referenzsignal vom Luftmassenmesser erzeugt und z. B. der Motorsteuerung bereitgestellt. Die Motorsteuerung kann aus dem am ersten Zeitpunkt t₁₁ erzeugten ersten Referenzsignal einen ersten Luftmassenstromoffset erzeugen. Der erste Luftmassenstromoffset ist ein Luftmassenstromwert, der den vom Luftmassenmesser fehlerhaft angezeigten Luftmassenstromwert darstellt. Der Luftmassenstromoffset wird üblicherweise in der Einheit [kg/h] angegeben.

Während der ersten Betriebsdauer 10 erzeugt der Luftmassenmesser kontinuierlich Messsignale, die jeweils den aktuellen Luftmassenstrom innerhalb des Einlasstrakts der Brennkraftmaschine anzeigen. Beispielsweise erzeugt der Luftmassenmesser an einem zweiten Zeitpunkt t₂₁, der ungleich dem ersten Zeitpunkt t₁₁ ist und in der ersten Betriebsdauer 10 liegt, ein Messsignal, das der Steuerung der Brennkraftmaschine bereitgestellt wird. Die Steuerung ermittelt aus diesem Messsignal des Luftmassenmessers einen entsprechenden Luftmassenstromwert.

Die Steuerung kann nun mit dem zuvor ermittelten ersten Luftmassenstromoffset und dem ermittelten aktuellen Luftmassenstromwert für den zweiten Zeitpunkt t₂₁ einen korrigierten Luftmassenstromwert ermitteln. Dies erfolgt beispielsweise durch Subtraktion des ersten Luftmassenstromoffsets vom aktuellen Luftmassenstromwert.

Nachdem die Brennkraftmaschine abgestellt wurde, kann das Verfahren kurz vor einem erneuten Kaltstart der Brennkraftmaschine an einem weiteren ersten Zeitpunkt t₁₂ ein neues Referenzsignal erzeugen, aus dem die Motorsteuerung einen zweiten Luftmassenstromoffset ermitteln kann. Auch der weitere erste Zeitpunkt t₁₂ liegt kurz vor dem Kaltstart der Brennkraftmaschine der zweiten Betriebsdauer 20 am Zeitpunkt t₀₂, beispielsweise 200 ms vor dem Zeitpunkt t₀₂. Während der zweiten Betriebsdauer 20 kann die Steuerung kontinuierlich, beispielsweise an einem weiteren zweiten Zeitpunkt t₂₂, korrigierte Luftmassenstromwerte unter Berücksichtigung des zweiten Luftmassenstromoffsets ermitteln.

In ähnlicher Weise kann das Verfahren während der dritten Betriebsdauer 30 der Brennkraftmaschine vorgehen, wobei an einem weiteren ersten Zeitpunkt t₁₃ ein drittes Referenzsignal vom Luftmassenmesser erzeugt wird, aus dem ein dritter Luftmassenstromoffset ermittel wird. Am weiteren zweiten Zeitpunkt t₂₃ kann dann unter Berücksichtigung des dritten Luftmassenstromoffset ein korrigierter Luftmassenstromoffset ermittelt werden.

Vorzugsweise ist das vorliegende Verfahren dazu ausgebildet, aus den drei Luftmassenstrommassenoffsets, die an den drei ersten Zeitpunkten t₁₁, t₁₂, t₁₃ ermittelt worden sind, einen Korrekturluftmassenstromwert zu ermitteln und diesen Korrekturluftmassenstromwert in den jeweiligen Betriebszyklus 10, 20, 30 anstelle des jeweiligen Luftmassenstromoffsets zur Ermittlung des korrigierten Luftmassenstromwerts an den zweiten Zeitpunkten t₂₁, t₂₂, t₂₃ verwenden.

In einer weiteren Ausgestaltung kann jeweils der vollständige Luftmassenstromoffset bei der Ermittlung des korrigierten Luftmassenstromwerts an den zweiten Zeitpunkten t₂₁, t₂₂, t₂₃ verwendet werden, d. h. 100% des jeweiligen Luftmassenstromoffsets. Dies kann jedoch jeweils zu einer Überkompensierung des Fehlers führen. Aus diesem Grund ist es bevorzugt, dass lediglich ein vorbestimmter Anteil des jeweils ermittelten Luftmassenstromoffsets bei der Ermittlung des korrigierten Luftmassenstromwerts berücksichtigt, beispielsweise subtrahiert, wird. Der vorbestimmte Anteil liegt z. B. bei ungefähr 80% des jeweiligen Luftmassenstromoffsets.

In gleicher Weise kann das Verfahren dazu ausgebildet sein, den aus den mehreren Luftmassenstromoffsets ermittelten Korrekturluftmassenstromwert bei der Ermittlung des korrigierten Luftmassenstromwerts nur anteilig berücksichtigen, beispielsweise mit ungefähr 90 %.

In einer weiteren vorteilhaften Ausgestaltung des erfindungsgemäßen Verfahrens können die ermittelten Luftmassenstromoffsets dahingehend ausgewertet werden, dass, falls ein ermittelter Luftmassenstromoffset um einen vorbestimmten Wert, z. B. um mehr als 50 %, vom ermittelten Korrekturluftmassenstromwert abweicht, dieser ermittelte Luftmassenstromoffset nicht in die kontinuierliche Ermittlung des Korrekturluftmassenstromwerts einfließt. Folglich wird ein solcher abweichender Luftmassenstromoffset nicht abgespeichert. Wenn der aus mehreren Luftmassenstromoffsets ermittelte Korrekturluftmassenstromwert beispielsweise ungefähr 5 kg/h beträgt, jedoch ein erneut ermittelter Luftmassenstromoffset ungefähr 8 kg/h beträgt, kann das Verfahren dazu ausgebildet sein, diesen abweichenden Luftmassenstromoffset bei der kontinuierlichen Mittelung zum Bestimmen des Korrekturluftmassenstromwerts nicht einfließen zu lassen.

## Patentansprüche

1. Verfahren zum Ermitteln eines korrigierten Luftmassenstromwerts in einer Brennkraftmaschine, die einen in einem Einlasstrakt der Brennkraftmaschine angeordneten Luftmassenmesser aufweist, mit:
- Bestimmen einer Kaltstartbedingung der Brennkraftmaschine an zumindest einem ersten Zeitpunkt, an dem noch kein Luftmassenstrom im Einlasstrakt vorliegt,
- Erzeugen von zumindest einem Referenzsignal mittels des Luftmassenmessers an dem zumindest einen ersten Zeitpunkt,
- Ermitteln von zumindest einem Luftmassenstromoffset aus dem zumindest einen Referenzsignal des Luftmassenmessers,
- Erzeugen eines Messsignals mittels des Luftmassenmessers an zumindest einem zweiten Zeitpunkt, der ungleich dem zumindest einen ersten Zeitpunkt ist und in einer Betriebsdauer der Brennkraftmaschine liegt,
- Ermitteln eines Luftmassenstromwerts aus dem Messsignal des Luftmassenmessers,
- Ermitteln des korrigierten Luftmassenstromwerts aus dem zumindest einen Luftmassenstromoffset und dem Luftmassenstromwert, und
- Ermitteln eines Korrekturluftmassenstromwerts aus dem zumindest einen Luftmassenstromoffset,
- wobei das Ermitteln des korrigierten Luftmassenstromwerts durch Subtraktion eines vorbestimmten Anteils des ermittelten Korrekturluftmassenstromwerts vom Luftmassenstromwert erfolgt,
- wobei der vorbestimmte Anteil in einem Bereich von ungefähr 50 % bis ungefähr 99 %, insbesondere in einem Bereich von ungefähr 70 % bis ungefähr 95 %, liegt, und
- wobei der vorbestimmte Anteil von einer Sensitivität und/oder Rohkennlinie eines zum Erzeugen des Messsignals angeordneten Luftmassenmessers abhängt.

2. Verfahren nach Anspruch 1, wobei der Korrekturluftmassenstromwert aus mehreren Luftmassenstromoffsets ermittelt wird, die an mehreren ersten Zeitpunkten ermittelt wurden.

3. Verfahren nach einem der vorhergehenden Ansprüche, wobei das Bestimmen der Kaltstartbedingung aufweist:
- Bestimmen, dass die Zündung der Brennkraftmaschine aktiviert wurde, und/oder
- Bestimmen, dass die Drehzahl der Brennkraftmaschine bei Null liegt, und/oder
- Bestimmen, dass die Temperatur der Brennkraftmaschine unterhalb einer vorbestimmten Schwellentemperatur liegt, und/oder
Bestimmen, dass die Temperatur der Brennkraftmaschine in einem vorbestimmten Bereich um die Umgebungslufttemperatur liegt.

4. Verfahren nach einem der vorhergehenden Ansprüche, wobei das Ermitteln des zumindest einen Luftmassenstromoffsets und/oder das Ermitteln des Luftmassenwerts auf einer vorbestimmten Kennlinie des Luftmassenmessers basieren.

5. Verfahren nach Anspruch 4, wobei die vorbestimmte Kennlinie des Luftmassenmessers zumindest teilweise nichtlinear ist.

6. Verfahren nach einem der vorhergehenden Ansprüche, wobei, falls der zumindest eine ermittelte Luftmassenstromoffset um einen vorbestimmten Wert vom ermittelten Korrekturluftmassenstromwert abweicht, dieser ermittelte Luftmassenstromoffset bei der Ermittlung des Korrekturluftmassenstromwerts berücksichtigt wird.

## Claims

1. Method for determining a corrected air mass flow value in an internal combustion engine, which has an air mass meter arranged in an intake tract of the internal combustion engine, the method comprising:
- determining a cold start condition of the internal combustion engine at at least one first time, at which there is still no air mass flow in the intake tract,
- producing at least one reference signal by means of the air mass meter at the at least one first time,
- determining at least one air mass flow offset from the at least one reference signal of the air mass meter,
- producing a measurement signal by means of the air mass meter at at least one second time, which is not equal to the at least one first time and is in an operating period of the internal combustion engine,
- determining an air mass flow value from the measurement signal of the air mass meter,
- determining the corrected air mass flow value from the at least one air mass flow offset and the air mass flow value, and
- determining an air mass flow correction value from the at least one air mass flow offset,
- wherein the corrected air mass flow value is determined by subtracting a predetermined proportion of the air mass flow correction value determined from the air mass flow value,
- wherein the predetermined proportion is in a range of approximately 50% to approximately 99%, in particular in a range of approximately 70% to approximately 95%, and
- wherein the predetermined proportion depends on a sensitivity and/or a raw characteristic curve of an air mass meter arranged to produce the measurement signal.

2. Method according to Claim 1, wherein the air mass flow correction value is determined from a plurality of air mass flow offsets, which have been determined at a plurality of first times.

3. Method according to one of the preceding claims, wherein determining the cold start condition comprises the following:
- determining that the ignition of the internal combustion engine has been activated, and/or
- determining that the speed of the internal combustion engine is zero, and/or
- determining that the temperature of the internal combustion engine is below a predetermined threshold temperature, and/or
determining that the temperature of the internal combustion engine is in a predetermined range around the ambient air temperature.

4. Method according to one of the preceding claims, wherein determination of the at least one air mass flow offset and/or determination of the air mass value are/is based on a predetermined characteristic curve of the air mass meter.

5. Method according to Claim 4, wherein the predetermined characteristic curve of the air mass meter is at least partially nonlinear.

6. Method according to one of the preceding claims, wherein, if the at least one air mass flow offset determined deviates by a predetermined value from the air mass flow correction value determined, this determined air mass flow offset is taken into account in determining the air mass flow correction value.

## Revendications

1. Procédé de détermination d'une valeur corrigée du débit de masse d'air dans un moteur à combustion interne qui comporte un débitmètre de masse d'air disposé dans une voie d'admission du moteur à combustion interne, le procédé comprenant les étapes suivantes :
- déterminer une condition de démarrage à froid du moteur à combustion interne à au moins un premier instant auquel il n'y a toujours pas de débit de masse d'air dans la voie d'admission,
- générer au moins un signal de référence au moyen du débitmètre de masse d'air à au moins un premier instant,
- déterminer au moins un décalage de débit de masse d'air à partir d'au moins un signal de référence du débitmètre de masse d'air,
- générer un signal de mesure au moyen du débitmètre de masse d'air à au moins un deuxième instant qui n'est pas égal à l'au moins un premier instant et qui se situe dans une durée de fonctionnement du moteur à combustion interne,
- déterminer une valeur de débit de masse d'air à partir du signal de mesure du débitmètre de masse d'air,
- déterminer la valeur de débit de masse d'air corrigée à partir d'au moins un décalage de débit de masse d'air et de la valeur de débit de masse d'air, et
- déterminer une valeur de débit de masse d'air de correction à partir de l'au moins un décalage de débit de masse d'air,
- la détermination de la valeur de débit de masse d'air corrigée étant effectuée par soustraction d'une proportion prédéterminée de la valeur de débit de masse d'air de correction déterminée de la valeur de débit de masse d'air,
- la proportion prédéterminée étant dans une gamme d'environ 50 % à environ 99 %, en particulier dans une gamme d'environ 70 % à environ 95 %, et
- la proportion prédéterminée dépendant d'une sensibilité et/ou d'une caractéristique brute d'un débitmètre de masse d'air disposé pour générer le signal de mesure.

2. Procédé selon la revendication 1, la valeur de débit de masse d'air de correction étant déterminée à partir d'une pluralité de décalages de débit de masse d'air qui ont été déterminés à une pluralité de premiers instants.

3. Procédé selon l'une des revendications précédentes, la détermination de la condition de démarrage à froid comprenant les étapes suivantes :
- déterminer que l'allumage du moteur a été activé et/ou
- déterminer que la vitesse de rotation du moteur à combustion interne est nulle et/ou
- déterminer que la température du moteur à combustion interne est inférieure à une température seuil prédéterminée, et/ou
- déterminer que la température du moteur à combustion interne se situe dans une plage prédéterminée autour de la température de l'air ambiant.

4. Procédé selon l'une des revendications précédentes, la détermination de l'au moins un décalage de débit de masse d'air et/ou la détermination de la valeur de la masse d'air étant basées sur une courbe caractéristique prédéterminée du débitmètre de masse d'air.

5. Procédé selon la revendication 4, la courbe caractéristique prédéterminée du débitmètre de masse d'air étant au moins partiellement non linéaire.

6. Procédé selon l'une des revendications précédentes, dans le cas où au moins un décalage de débit de masse d'air déterminé s'écarte d'une valeur prédéterminée de la valeur de débit de masse d'air de correction déterminée, ce décalage de débit de masse d'air déterminé étant pris en compte lors de la détermination de la valeur du débit de masse d'air de correction.
